# DEMANDE DE BREVET EUROPEEN

(11) **EP 1 564 873 A1**
(43) Date de publication de la demande: **17.08.2005**
(21) Numéro de dépôt: 05001411.7
(22) Date de dépôt: 25.01.2005
(51) Int. Cl.: H02K 21/12, H02K 1/14

(54) **Moteur electrique synchrone**

(30) Priorité: 03.02.2004 FR 0400977
(71) Demandeur: Electronique Bobinage D'Aquitaine, 33650 Saint Medard D'Eyrans (FR)
(72) Inventeur: Nogarede, Bertrand, 31000 Toulouse (FR); Trinh-Xuan, Dieu, 64000 Lons (FR)
(74) Mandataire: Vannini, Torquato

(57) **Abrégé**

L'invention concerne les moteurs électriques synchrones sans balais dont le rotor est formé d'un aimant permanent.

Elle consiste à réaliser le stator d'un tel moteur sous la forme de deux pièces (111,121) centrées sur l'axe du rotor (109) et venant s'emboîter l'une dans l'autre pour enfermer un bobinage (106) formé d'un anneau concentrique à l'axe du rotor et déformé en zigzag pour "serpenter" entre les encoches du stator.

Elle permet de simplifier la fabrication de ces moteurs.

## Description

La présente invention se rapporte aux moteurs électriques synchrones. Elle concerne plus particulièrement les moteurs sans balais dont le rotor est formé d'un aimant permanent en forme de tube comportant au moins deux pôles radiaux.

On trouve dans le commerce des rotors fabriqués par injection d'une matière plastique magnétique dite "plasto-aimant" qui peut être magnétisée de manière permanente. Ces rotors ont la forme d'un tube qui comprend une ou plusieurs paires de pôles radiaux (1 à 5 paires). Ces rotors dont l'aimantation atteint 0.5 T et plus suivant les composites, sont fabriqués par la société ARELEC. Les dimensions des rotors sont :
- diamètre externe variant entre 10 et 60mm, et la longueur de 20 à 100mm.

Les "plasto-aimants" facilitent la production en grande série grâce à l'utilisation d'un moule à une ou plusieurs empreintes, pour chaque type de rotor.

On connaît également des matériaux magnétiques doux composites dits SMC (pour "Soft Magnetic Composite"). Il s'agit de poudre de fer doux magnétique compactée. On citera plus par exemple le Somaloy 550 fabriqué par la société suédoise Höganäs.

Ces matériaux composites peuvent être mis en oeuvre par moulage pour fabriquer par exemple des stators (les culasses) d'un moteur électrique.

On peut donc réaliser un moteur synchrone classique en utilisant un stator (culasse) torique En SMC comportant des encoches dans lesquelles seront placés les bobinages électriques du moteur.

On peut aussi penser à réaliser pour le stator une structure dite "en griffes". Cette structure, qui est plus particulièrement utilisée dans les alternateurs pour automobiles comprend une enveloppe de forme torique creuse dans laquelle est placée une bobine simple dont l'axe se confond avec celui du moteur.

Pour obtenir les pôles, la paroi interne du tore est découpée longitudinalement pour présenter des parties dites "griffes" qui sont reliées par une extrémité alternativement à l'une et à l'autre des faces latérales du stator en étant séparées à leur autre extrémité de la face à laquelle elles ne sont pas reliées. Les ouvertures longitudinales entre ces griffes permettent de déterminer une succession de pôles Nord et Sud.

Cette structure est simple à réaliser mais elle présente l'inconvénient d'avoir un rendement assez faible que le stator soit classique c'est-à-dire réalisé par un empilement de tôles ou en matériau composite SMC.

C'est pourquoi de tels moteurs ne peuvent pas être utilisés pour de nombreuses applications nécessitant un bon rendement.

A cette fin il est proposé un moteur présentant une structure simplifiée et un rendement compatible avec la plupart des applications notamment dans le domaine de l'automobile, l'électroménager.

L'invention a donc plus particulièrement pour objet, un moteur électrique synchrone, du type comprenant un rotor aimanté et au moins un stator comprenant une culasse munie de pièces polaires, principalement caractérisé en ce que les pièces polaires délimitent des encoches dans lesquelles est inséré un bobinage et en ce que le bobinage à la forme d'un anneau concentrique à l'axe du rotor et déformé en zigzag pour "serpenter" entre les encoches en passant successivement en dessus puis en dessous de deux pièces polaires consécutives.

Selon une autre caractéristique, la culasse est formée de n modules, n correspondant au nombre de phase du moteur, chaque module comprenant deux pièces centrées sur l'axe du rotor et venant s'emboîter l'une dans l'autre pour enfermer le bobinage.

Selon une autre caractéristique, la culasse est formée de deux pièces centrées sur l'axe du rotor et venant s'emboîter l'une dans l'autre pour enfermer le bobinage.

Selon une autre caractéristique, les deux pièces sont identiques.

Selon une autre caractéristique, la ligne de jonction des deux pièces comprend des sections surélevées et des sections en retrait qui forment un emboîtement hermaphrodite.

Selon une autre caractéristique, chaque pièce polaire comprend une partie vide qui est située au niveau de la section surélevée de la pièce de la culasse sur laquelle se trouve ladite pièce polaire.

Selon une autre caractéristique, le stator est en matériau composite à base de poudre de fer doux magnétique SMC, chaque pièce constituant le ou les modules est obtenue par moulage.

Selon une autre caractéristique, le bobinage est obtenu par déformation d'un anneau initialement circulaire.

Cette déformation permet d'avoir des conducteurs obliques par rapport aux pôles se présentant sous fourme d'un serpentin au lieu de lignes brisées en créneau réduisant ainsi l'encombrement.

Le moteur ainsi réalisé comprend un rotor en "plasto-aimant" et un stator en SMC qui ne présente pas les inconvénients cités précédemment.

Ce moteur présente de faibles coûts de fabrication et peut être fabriqué en grande série tout en présentant des performances compatibles avec des applications dans l'industrie automobile, l'industrie aéronautique, les appareils médicaux, les appareils électroménager.

D'autres particularités et avantages de l'invention apparaîtront clairement dans la description suivante faite en regard des figures annexées qui représentent :
- la figure 1A représente une vue en perspective de la culasse du stator selon l'invention,
- la figure 1B représente une vue schématique en coupe et en perspective cavalière de la culasse d'un stator selon l'invention ;
- la figure 2, une vue schématique selon une autre coupe et une autre perspective d'un stator selon l'invention muni de son bobinage;
- la figure 3, une vue schématique complète du stator de la figure 2 selon une troisième perspective ;
- la figure 4, une vue éclatée des trois pièces formant une réalisation concrète d'un stator selon l'invention ;
- la figure 5, une vue ouverte d'un moteur diphasé selon l'invention, l'une des phases étant désassemblée et l'autre assemblée;
- la figure 6, une vue éclatée de toutes les pièces formant le moteur;
- la figure 7, un schéma d'une structure de stator classique, le bobinage se faisant le long des plots statoriques;
- la figure 8, un schéma d'une structure de stator à griffes;
- la figure 9, un schéma d'une structure de stator selon la présente invention.

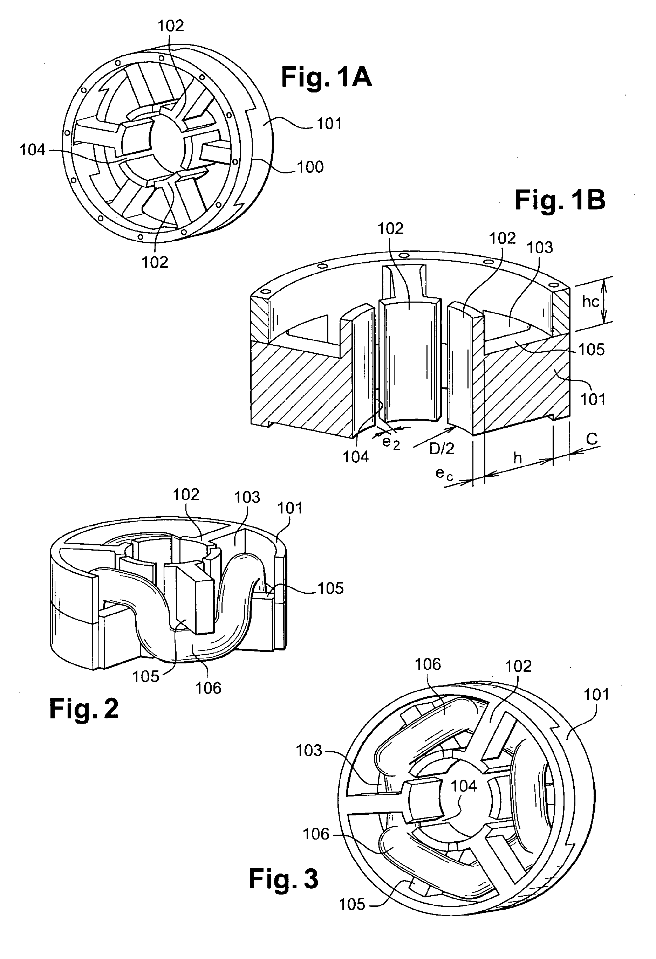

Le stator représenté sur les figures 1A en perspective cavalière et 1B en coupe est celui d'un moteur selon l'invention, que les inventeurs proposent d'appeler ZIGMAG.

Ce stator ressemble superficiellement à celui d'un moteur "classique" et comporte donc une culasse formée d'une partie circulaire extérieure continue 101 en forme de couronne prolongée vers l'intérieur par des pièces polaires 102 en forme de T délimitant des encoches 103 permettant de placer les bobinages et de délimiter des entrefers 104. Toutefois, on remarque que ces pièces polaires 102 comportent sur la barre verticale du T une partie vide 105 s'étendant entre la couronne 101 et la barre horizontale du T. Ces parties vides 105 sont alternativement sur le haut de l'une des pièces polaires 102 et sur le bas de la suivante.

Ainsi sur la figure 1B, qui ne représente que trois pièces polaires 102, on ne voit que les parties vides 105 des 2 pièces polaires 102 extérieures, alors que la partie vide de la pièce polaire 102 centrale, qui est en bas par rapport aux deux autres n'est pas visible sur cette figure en raison de l'orientation de celle-ci.

Cette constitution permet, comme représenté sur les figures 2 et 3, de disposer dans le stator une bobine unique 106, coaxiale à l'axe du moteur et qui s'enroule autour de cet axe en passant successivement dans une encoche 103 puis dans une partie vide 105, dans l'encoche suivante puis dans la partie vide 105 suivante etc.

On remarque que le bobinage dans ce trajet "serpente" en quelque sorte à l'intérieur des encoches et des parties vides et adopte une forme en zigzag. En effet il passe sensiblement horizontalement dans une première partie vide supérieure, descend en biais dans l'encoche contiguë, repasse sensiblement horizontalement dans la partie vide suivante qui est en bas par rapport à la première, remonte en biais dans l'encoche suivante, et ainsi de suite...

La modélisation, aussi bien que les essais sur un prototype, de ce système de stator a montré que l'on obtenait des résultats tout à fait satisfaisants, comparables à ceux obtenus avec un stator "classique", et un rendement bien meilleur que celui obtenu avec un stator à "griffes".

La structure de ce stator, telle que décrite jusqu'à présent, pourrait présenter à priori des difficultés de réalisation, en particulier pour le bobinage.

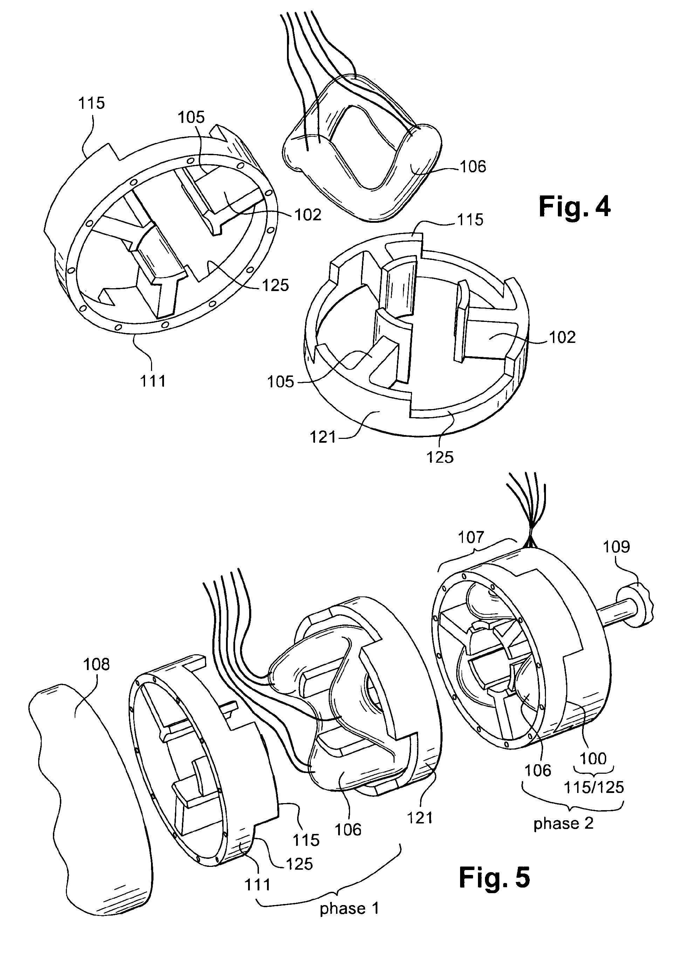

Cependant il est proposé avantageusement que le stator se présente en deux parties comme on peut le voir sur la figure 1A par la présence du trait 100 et comme on peut le voir sur les figures 4 et 5.

L'invention propose de réaliser la culasse du stator sous la forme des 2 parties portant respectivement les références 111 et 121. Ces deux parties sont destinées à venir s'emboîter entre elles pour enfermer le bobinage 106.

A cette fin, dans le mode de réalisation ici représenté, la couronne extérieure 101 de la culasse est divisée selon une ligne brisée 100 s'étendant autour du diamètre médian de cette couronne. Cette ligne brisée présente donc des sections 115 surélevées par rapport à ce diamètre et des sections 125 situées en retrait sous le niveau de ce diamètre.

De manière préférentielle, les sections surélevées 115 sont situées au niveau des parties vides 105 des pièces polaires 102 et les sections 125 sont en retrait par rapport au diamètre de la même distance que les sections 115 sont en surélévation par apport à ce diamètre. Les longueurs de ces sections 115 et 125 sont alors identiques.

On obtient ainsi deux pièces identiques qui peuvent s'emboîter de manière hermaphrodite, avec les sections 115 surélevées de l'une placées dans les sections 125 de l'autre, pour constituer une culasse complète. Cette structure présente l'avantage d'être très compacte et donc très peu encombrante ce qui permet la réalisation de petits moteurs.

L'assemblage de plusieurs modules ainsi formés permet la réalisation de moteurs multi phases comme cela est décrit et illustré dans la suite par le schéma de la figure 5.

La forme relativement compliquée de ces pièces serait peu adaptée à une fabrication par usinage, mais elle ne présente aucun problème de réalisation pour une fabrication par moulage de matériaux SMC.

Ainsi selon une caractéristique de l'invention, le stator est fabriqué dans un matériau SMC de manière à pouvoir être moulé et fabriqué à grande échelle et à faible coût. Le bobinage 106 est quant à lui, réalisé en deux temps.

Dans un premier temps on bobinera un anneau circulaire simple de diamètre supérieur à celui de la culasse.

Dans un deuxième temps cet anneau est conformé de manière à prendre la forme en zigzag représentée sur les figures et qui est adaptée pour que le bobinage puisse prendre sa place entre les deux pièces décrites ci-dessus et qui forment la culasse quand elles sont assemblées. Cette conformation se fera en utilisant un outillage adapté, par exemple six mandrins (trois au-dessus et trois en dessous), réalisé en un matériau, du bois ou du plastique rigide par exemple, suffisamment dur pour obtenir la forme voulue et suffisamment souple pour ne pas détériorer le bobinage.

La déformation appliquée au bobinage permet d'avoir des conducteurs obliques par rapport aux pôles se présentant sous fourme d'un serpentin au lieu de lignes brisées en créneau comme c'est le cas dans l'état de la technique. La conformation du bobinage selon l'invention contribue par conséquent à réduire l'encombrement du moteur.

Le dispositif décrit jusqu'à présent et illustré par les figures 1 à 4 correspond à un moteur synchrone monophasé (n=1), à trois paires de pôles sur les figures.

Compte tenu de la facilité de réalisation en grande série d'un tel moteur, il est avantageux de regrouper plusieurs stators en série sur un même rotor pour obtenir par exemple un moteur multiphasé ou plus puissant.

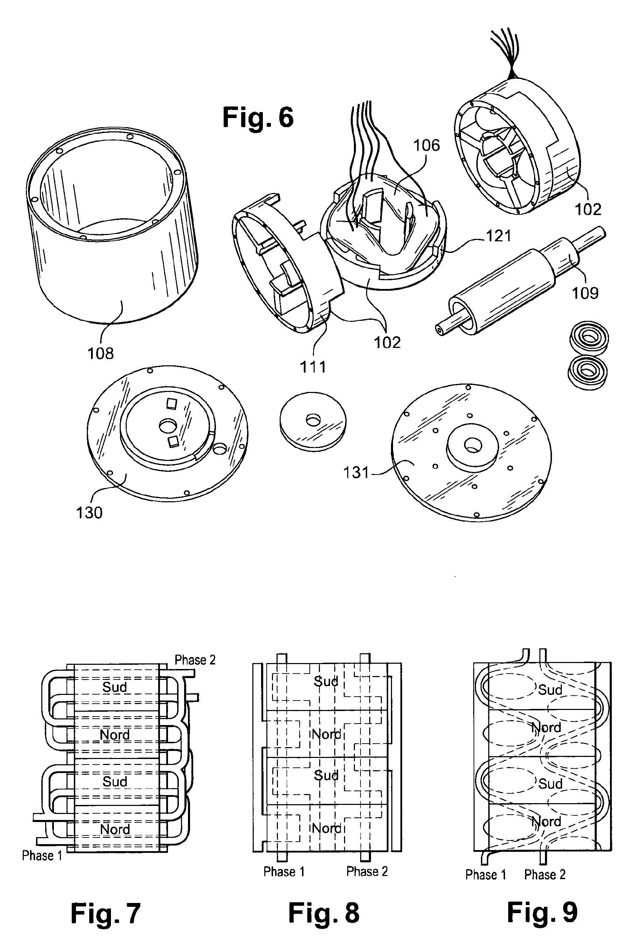

On a représenté sur les figures 5 et 6 un moteur diphasé (n=2) partiellement désassemblé figure 5 et complètement désassemblé figure 6.

On distingue bien la partie 121 du stator de la première phase dans laquelle est positionné le bobinage 106 et la partie 111 de ce stator prête à être assemblée sur cette partie 121. Le stator 107 de la deuxième phase est représenté assemblé et on distingue bien les sections 115 et 125 emboîtées l'une dans l'autre. On remarque également une partie du rotor 109 dont la longueur est adaptée à la longueur des deux stators, qui sont réunis entre eux par une carcasse 108, 130, 131, qui peut être en métal (aluminium par exemple) ou en plastique.

Les schémas des figures 7, 8 et 9 permettent de mettre en évidence les différences entre une structure dite classique (figure 7), une structure à griffe (figure 8) et la structure proposée selon l'invention.

La figure 7, montre que dans le cas de la structure classique, pour obtenir une alternance de pôles Nord/Sud, le bobinage se fait le long des plots statoriques, le bouclage se faisant aux extrémités du moteur. Ici, c'est le bobinage qui « suit » le fer. Par contre, dans les structures à griffes, c'est le fer qui « s'enroule » autour du bobinage pour réaliser l'alternance de pôles (figure 8).

Dans la structure "ZIGMAG" de la présente invention figure 8, on se rapproche du bobinage global du stator à griffes, tout en ne tordant pas le fer. En effet, le bobinage contourne les plots statoriques en zigzag, mais avec une amplitude moins importante. Il est en outre possible de décaler les plots pour permettre une plus faible torsion du bobinage.

Pour un moteur 1 dont les caractéristiques imposées sont les suivantes :

| | |
|---|---|
| Couple | 0.2 N.m |
| Vitesse | 3000 tr/min |
| Puissance | 65 W |
| Alimentation | 12-14 V continu; |

On obtient avec la structure conforme à l'invention, les caractéristiques suivantes:

| | Moteur 1 |
|---|---|
| Contraintes | |
| Couple | 0,2 N.m |
| Vitesse | 3000 tr/min |
| Longueur L | 28,5 mm |
| Epaisseur La | 4 mm |
| Alésage D | 25 mm |
| Aimantation Br | 0,5 T |
| Coefficient de Carter K_{c} | 1,14 |
| B dans l'entrefer sans K_{c} | 0,36 T |
| Be | 0,274 T |
| Charge linéique K | 26 000 A/m |
| Densité surfacique de courant | 6 A/mm² |
| J_{Cu} | |
| Epaisseur de bobinage h_{c} | 8,5 mm |
| Profondeur d'encoche | 16 mm |
| (d'entrefer) h | |
| Ouverture d'encoche | 2,5 mm |
| (d' entrefer) e2 | |
| Epaisseur d'une dent d | 4,7 mm |
| Epaisseur de culasse C (non | 2,4 mm |
| optimisée) | |
| Epaisseur e_{c} | 2,7 mm |

L'épaisseur de la culasse peut être plus fine si la pièce est réalisée par moulage et ceci afin d'économiser de la matière.

Dans une variante proposée en vue de minimiser le volume du stator, sans toutefois altérer la tenue mécanique du stator les dimensions optimales sont les suivantes :

| | Moteur 1 |
|---|---|
| Be | 0,274 T |
| Charge linéique K | 26 000 A/m |
| Densité surfacique de courant J_{Cu} | 6 A/mm² |
| Epaisseur de bobinage h_{c} | 13 mm |
| Profondeur d'encoche (d' entrefer) h | 11,7 mm |
| Ouverture d'encoche (d' entrefer) e2 | 2,5 mm |
| Epaisseur d'une dent d | 4,8 mm |
| Epaisseur de culasse C (non optimisée) | 2,4 mm |
| Epaisseur e_{c} | 2,7 mm |

Concernant le bobinage, la puissance mécanique souhaitée est atteinte pour 65 spires avec des fils aptes à conduire un courant pouvant aller jusqu'à 7 A.

## Revendications

1. Moteur électrique synchrone, du type comprenant un rotor aimanté (109) et au moins un stator comprenant une culasse munie de pièces polaires (102), **caractérisé en ce que** les pièces polaires délimitent des encoches (103) dans lesquelles est inséré un bobinage (106), **en ce que** :
- la culasse est formée de n modules, n correspondant au nombre de phase du moteur, chaque module comprenant deux pièces (111,121) centrées sur l'axe du rotor (109) et venant s'emboîter l'une dans l'autre pour enfermer le bobinage (106), chaque pièce étant munie d'une partie circulaire extérieure continue (101) en forme de couronne prolongée vers l'intérieur par les pièces polaires (102) se présentant en forme de T délimitant les encoches (103) permettant de placer le bobinage et de délimiter des entrefers (104), ces pièces polaires (102) comportant sur la barre verticale du T une partie vide (105) s'étendant entre la couronne (101) et la barre horizontale du T, les parties vides (105) étant alternativement sur le haut de l'une des pièces polaires (102) et sur le bas de la suivante,
et **en ce que** :
- le bobinage (106) à la forme d'un anneau concentrique à l'axe du rotor et déformé en zigzag pour "serpenter" entre les encoches en passant successivement en dessus puis en dessous d'une partie vide (105) de deux pièces polaires (102) consécutives, le bobinage serpentant ainsi autour des pièces polaires consécutives qui appartiennent chacune à une pièce distincte de la culasse.

2. Moteur selon la revendication 1, **caractérisé en ce que** les deux pièces (111,121) sont identiques.

3. Moteur selon l'une quelconque des revendications 1 ou 2, **caractérisé en ce que** la ligne de jonction (100) des deux pièces (111,121) comprend des sections surélevées (115) et des sections en retrait (125) qui forment un emboîtement hermaphrodite.

4. Moteur selon la revendication 3, **caractérisé en ce qu'**une partie vide (105) de chaque pièce polaire (102) est située au niveau de la section surélevée (115) de la pièce de la culasse (111,121) sur laquelle se trouve ladite pièce polaire.

5. Moteur selon l'une quelconque des revendications précédentes, **caractérisé en ce que** le stator est en matériau composite à base de poudre de fer doux magnétisé SMC, chaque pièce constituant le ou les modules étant obtenue par moulage.

6. Moteur selon l'une quelconque des revendications 1 à 5, **caractérisé en ce que** le bobinage (106) est obtenu par déformation d'un anneau initialement circulaire.
